# EUROPEAN PATENT APPLICATION

(11) **EP 1 447 646 A1**
(43) Date of publication of application: **18.08.2004**
(21) Application number: 02777951.1
(22) Date of filing: 25.10.2002
(51) Int. Cl.: G01C 21/00, G08G 1/0969

(54) **INFORMATION DISPLAY SYSTEM**

(30) Priority: 25.10.2001 JP 2001327421; 25.10.2001 JP 2001328353
(71) Applicant: AISIN AW CO., LTD., Anjo-shi Aichi 444-1192 (JP)
(72) Inventor: YAMADA, Kunihiro, Aisin AW Co., Ltd., Okazaki-shi, Aichi 444-8564 (JP); SHIBATA, Yumi, Aisin AW Co., Ltd., Okazaki-shi, Aichi 444-8564 (JP); MASUDA, Hiroyoshi, Aisin AW Co., Ltd., Okazaki-shi, Aichi 444-8564 (JP); YAMAZAKI, Kiyonobu, Aisin AW Co., Ltd., Okazaki-shi, Aichi 444-8564 (JP)
(74) Representative: VOSSIUS & PARTNER
(86) International application number: PCT/JP2002/011076
(87) International publication number: WO 2003/036232

(57) **Abstract**

An information display system according to the present invention comprises a map information storage in which map information is stored, an input device from which schedules are inputted, a schedule storage in which the schedules are stored, a display device on which a map **(41)** is displayed, and a display control device by which a schedule reminder message is displayed on the map **(41)** at a specified time; whereby the operator can be reminded of the schedule when his/her vehicle comes close to a specified location during a period of the schedule, and further the operator can be reminded of the schedule before a date of the schedule comes.

## Description

### [Technical Field of the Invention]

This invention relates to an information display system.

### [Discussion of the Background]

There have been conventional navigation apparatuses for a vehicle such as an automobile, wherein an optimum route from a user-selected departure point to a user-selected destination is searched based on road map data and therewith the searched route is displayed on a display screen.

Further, there has been provided a navigation apparatus, wherein once a destination and a visit date are selected and registered by an operator i.e., a driver of the vehicle, a route to the destination is automatically searched on that very visit date and therewith the searched route is automatically displayed on a display screen. Here, the destination may be, for example, a resort, a sightseeing spot, and an intended visit place; the visit date may be, for example, an upcoming day off. For instance, once the operator designates the day off as the visit date, a route to the registered destination is automatically searched on that very day off and therewith the searched route is displayed on the display screen.

That is, the conventional navigation apparatus can notify the operator of an optimal route to a scheduled destination on the very date of the schedule. Thereby, on the very date of the schedule, the operator can be sure to check the route to the destination.

Disadvantageously, however, said conventional navigation apparatus is functionally limited in that the route to the destination is displayed to the operator only when the date of the schedule comes. This deprives the operator of the opportunity to make sure of his/her schedule before the date of the schedule.

Further to this disadvantage, sometimes there is a case where the operator completely forgets his/her upcoming schedule that has already been registered. For example, take a case where the operator has been scheduled to have a Sunday drive to a resort one month later but now completely forgets that schedule. In this case, even if a resort and a date of one-month-ahead Sunday have already been registered respectively as the destination and the date of the schedule, a route to that resort is not displayed beforehand on the display screen until one-month-ahead Sunday comes. That is, the operator cannot be sure to check his/her schedule for one-month-ahead Sunday until he/she turns on his/her navigation apparatus and watches the display screen on that Sunday.

Further disadvantageously, the conventional navigation apparatus cannot support rough schedule that has no specific date, for example, "Pay a bill from my bank account sometime within the next week" or " Send a parcel from the post office within one week from today." Since such rough schedule has a certain range in date, the operator gets in trouble when he/she inputs such rough schedule into the conventional navigation apparatus.

For solving aforesaid problems, the present invention provides an information display system. This information display system can remind the operator of his/her pre-made schedule when his/her vehicle comes close to a specified location within a period of that pre-made schedule. It is the object of the present invention that the information display system gives the operator a schedule reminder message and also it is the object of the present invention to remind the operator of his/her schedule before the date of that schedule comes.

### [Disclosure of the Invention]

An information display system according to the present invention comprises; a map information storage in which map information is stored, an input device from which a schedule is inputted, a schedule storage in which the schedule is stored, a display device on which a map is displayed, and a display control device by which a schedule reminder message is displayed on the map at a specified time.

With aforesaid composition, the information display system can notify the operator at a specified time that a schedule has been registered in connection with a certain position shown on the map.

Another information display system according to the present invention comprises: a server in which the map information storage, the schedule storage, and a transmit-receive unit are included; a first information terminal in which the input device and a transmit-receive unit are included; and a second information terminal in which the display device, the display control device, and a transmit-receive unit are included.

Other information display system according to the present invention comprises: a server in which the map information storage, the schedule storage, and the transmit-receive unit are included; and an information terminal in which the input device, the display device, the display control device, and a transmit-receive unit are included.

Further, there is other information display system according to the present invention wherein the specified time at which the schedule reminder message is displayed on the map comes within a period of the schedule.

Moreover, there is other information display system according to the present invention wherein the display device displays a calendar on which the period of the schedule is shown by means of the display control device.

Furthermore, there is other information display system according to the present invention wherein a location of the schedule is displayed on the map by means of the display control device.

Besides, there is other information display system according to the present invention wherein a route to the location of the schedule is displayed on the map by means of the display control device.

Additionally, there is other information display system according to the present invention wherein the specified time at which the schedule reminder message is displayed on the map comes before a date and time of the schedule.

On top of that, there is other information display system according to the present invention wherein the specified time at which the schedule reminder message is displayed on the map is the moment when a present position of an operator's vehicle arrives at a specified location.

In addition, there is other information display system according to the present invention wherein the schedule reminder message may be given to an operator acoustically or visually.

### [Brief Description of the Drawings]

**FIG. 1** shows a conceptual drawing of compositions of an information display system according to a first embodiment of the present invention.
**FIG. 2** shows a process of file classification carried out by a PIM processing unit according to the first embodiment of the present invention.
**FIG. 3** shows a first exemplary screen view displayed on an information terminal according to a first embodiment of the present invention.
**FIG. 4** shows a second exemplary screen view displayed on the information terminal according to the first embodiment of the present invention.
**FIG. 5** is a flowchart showing a process of the file classification carried out by the PIM processing unit according to the first embodiment of the present invention.
**FIG. 6** is a flowchart showing a process of information display according to the first embodiment of the present invention.
**FIG. 7** shows a first exemplary screen view displayed on the information terminal according to a second embodiment of the present invention.
**FIG. 8** shows a second exemplary screen view displayed on the information terminal according to the second embodiment of the present invention.
**FIG. 9** shows a third exemplary screen view displayed on the information terminal according to the second embodiment of the present invention.

### [Description of the Preferred Embodiment]

Embodiments according to the present invention will be described hereinafter in detail with reference to the accompanying drawings.

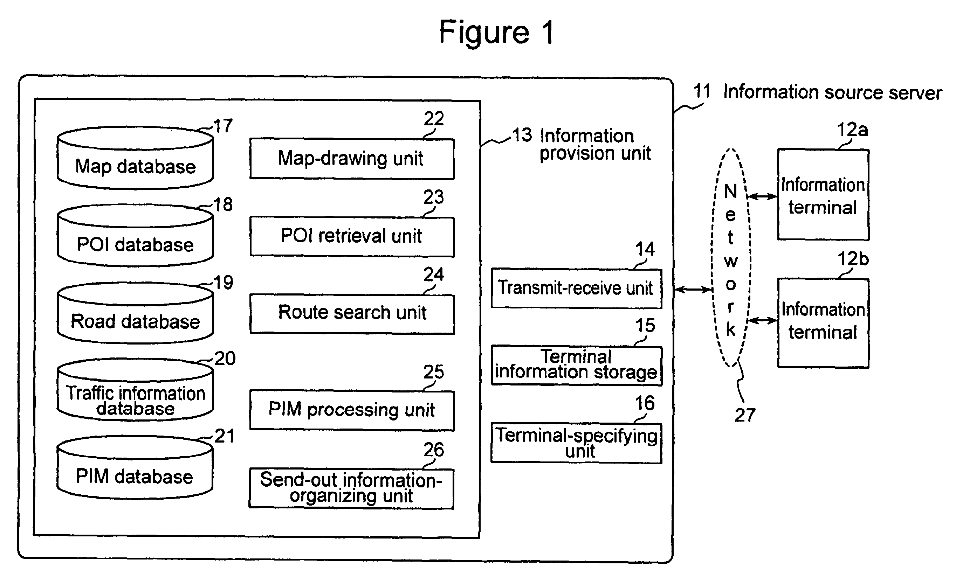

**FIG. 1** shows a conceptual drawing of compositions of the information display system according to a first embodiment of the present invention.

In **FIG. 1**, an information source server **11** is constructed in a computer which comprising processing means such as a CPU or a MPU, storage means such as a semiconductor memory, a magnetic disk, or an optical disk, and a communication interface. The place where said server is constructed may not be limited to a single computer but may be so-called a decentralized computer networks in which plural computers are systematically connected one after the other. Further, together with the server **11**, other system may be constructed in said computer. Otherwise, the server **11** may be a part of a system that is constructed in other computer.

An information terminal **12a** and an information terminal **12b** are respectively operated as a first information terminal and a second information terminal. Actually in the present information display system, a plurality of the information terminals may be used and operated at a time. However, for convenience of explanation, the description here takes a case where only two terminals i.e., the terminal **12a** and **12b** are used in the information display system. The operator may be a driver or a fellow passenger of a vehicle such as an automobile, a truck, a bus, or a motorcycle, and further may be a pedestrian, a user of public transportation, or possible anyone.

Either the terminal **12a** or **12b** comprising: a main processing device such as a CPU or a MPU; a storage device such as a semiconductor memory, a magnetic disk, and an optical disk; a display device such as a liquid crystal display, a LED (Light Emitting Diode) display, and a CRT; an input means such as a keyboard, a joystick, a cross-shaped key, a push-button, a remote control, and a touch-sensitive panel; a display control device by which the display device is controlled; and a transmit-receive unit such as a communication interface.

Either the terminal **12a** or **12b** mainly takes the form of a navigation apparatus provided for a vehicle such as an automobile, a truck, a bus, and a motorcycle. Further, each of the terminal **12a** and **12b** may be a stationary telephone, a portable telephone, a personal handy phone (which used in PHS: Personal Handy-Phone System), a portable information terminal, a PDA (Personal Digital Assistant), a personal computer, a game machine, or a digital television.

Moreover, either the terminal **12a** or **12b** may include a present position detective device (not shown). If either the terminal **12a** or **12b** is, for example, a havigation apparatus that includes the present position detective device, the present position of the vehicle can be detected by using a GPS (Global Positioning System), a terrestrial magnetism sensor, a distance sensor, a steering sensor, a beacon sensor, or a gyro sensor. If either the terminal **12a** or **12b** is, for example, a portable telephone or a portable information terminal, the position of a base station for the portable telephones or the portable information terminals is detected as a present position by means of the present position detective device. This detection is based on communication between the present position detective device and the base station that covers an area where the portable telephone or the portable information terminal exists. Such portable telephone or portable information terminal may be equipped with a GPS receiver.

Under the foregoing composition, the server **11** is connected to either the terminal **12a** or the terminal **12b** via a network **27**. Based on this connection, the communication between the server **11** and the terminals **12a** or **12b** is achieved. The network **27** may be a wire/wireless public switched network, a dedicated communication network, a portable telephone network, the Internet, an intranet, a LAN (Local Area Network), a WAN (Wide Area Network), a satellite communication network, any possible communication networks, or a certain combined network comprised of said various networks. Further, the server **11** may be communicated with the terminal **12a** or **12b** via CS (Communication Satellite)/BS (Broadcasting Satellite), may be communicated through ground wave digital television broadcasting/ FM (Frequency Modulation) multiplex broadcasting, or may be communicated via an optical beacon/ a radio wave beacon placed along roads.

To sum up, the information display system according to the present embodiment is mainly made up of the information source server **11**, the information terminal **12a**, and the information terminal **12b**. To use the information display system, each operator must be registered with the information display system and accordingly possesses an ID number; not only the operator but also each of the terminal **12a** and **12b** must be registered with such system.

The information source server **11** comprises: an information provision unit **13** from which information about a route to a destination and other various information are sent back to either the terminal **12a** or **12b** upon receipt of information about a departure point and a destination sent off from either the terminal **12a** or **12b**; a transmit-receive unit **14** with which each of the terminal **12a** and **12b** exchange the information; a terminal information storage **15** in which the exchanged information is independently stored for each of the terminal **12a** and the terminal **12b**; and a terminal specifying unit **16** by which each of the terminal **12a** and **12b** is specified based on the ID number.

Hereinafter, the information provision unit **13** will be described. The information provision unit **13** including; a map database **17** serving as a map information storage, a POI (Point of Interest) database **18**, a road database **19**, a traffic information database **20** serving as a traffic information storage, and a PIM (Personal Information Manage) database **21** serving as a schedule storage.

The map database **17** stores map information used for drawing a map; the map information are, for example, nodes, links, coordinates, and facility names. The POI database **18** stores facility data, telephone number-address data, event data, and the like, all of which are used for retrieving a point such as a departure point, a destination point, or a pass-through point. The road database **19** stores data for searching a route; specifically such data are, for example, road search cost (here, the cost means a weight given to data used in searching a road) and a road type.

Further, for example, if the present system is used in combination with a traffic information communication system called VICS(R), the traffic information database **20** can store traffic information about traffic congestion and traffic regulations. Such traffic information is prepared based on the information collected by traffic regulatory systems that the police or the Japan Highway Traffic Corporation controls. Furthermore, it is desirable that the traffic information database **20** may store event schedule information about a site or a date of a scheduled event such as a festival, a parade, or a fireworks display. In addition, it is desirable that the traffic information database **20** should store statistical congestion information like "roads around a railway station or a mega commercial facility are congested every day during a certain period of time except a weekend" or "roads around a sea resort during a summer vacation are congested." Moreover, it is desirable that the traffic information database **20** should store meteorological information such as a weather forecast originally made by the Meteorological Agency.

The PIM database **21** contains personal files for respective operators. In each personal file, attribute files (a schedule file, a calendar file, an address book file, a telephone directory file, a registered point list file, a memo file, and the like) are included. In each attribute file, operator's personal information in the form of a schedule list, a calendar, an address book, a telephone directory, a registered point list, and a memo is stored. Although the personal file is generally prepared for every one of the operators who have already been registered in the system, it may be prepared on an information terminal basis. On top of that, the personal file may be prepared on an ID number basis if one operator possesses a plurality of ID numbers.

The server **11** has storage means for the map database **17**, the POI database **18**, the road database **19**, the traffic information database **20**, and the PIM database **21**. Said storage means may be either an internal storage medium or an external storage medium. Such medium may be any one of the followings: a magnetic tape, a magnetic disk, a magnetic drum, a CD-ROM, a MD (Mini Disk), a DVD-ROM, a DVD-RAM, an optical disk, a MO (magneto-optical) disk, an IC card, an optical card, a stick memory, a memory card, or any other possible media.

Further to said databases, the information provision unit **13** including: a map drawing unit **22** by which a map is drawn based on the map information; a POI retrieval unit **23** by which positional information, for example coordinates, an address, or a name of a registered location (as a destination), is retrieved based on the information stored in the POI database **18**; and a route search unit **24** by which a route from a present position of the vehicle to a destination is searched based on information stored in the road database **19** or based on information stored in the traffic information database **20**.

Furthermore, the information provision unit **13** includes a PIM processing unit **25** by which the operator's schedule list, calendar, address book, telephone directory, registered point list, memo, and the like are prepared and updated based on the information sent from either the terminal **12a** or **12b**, and such PIM processing unit **25** may extract information from said schedule list, calendar, address book, telephone directory, registered point list, memo, and the like. In addition, the information provision unit **13** includes a send-out information organizing unit **26** by which information to be sent out to either the terminal **12a** and **12b** is organized and edited.

Moreover, the information provision unit **13** includes a destination-setting unit, an estimated arrival time calculating unit, and a comparing unit (these are not shown). Additionally, the information provision unit **13** stores several programs such as a PIM program and a route search program. Here, the PIM program is one of managing a schedule list, a calendar, an address book, a telephone directory, a registered point list, a memo, and the like, all of which are useable in the portable information terminals, PDAs, and personal computers.

If the positional information (a destination, a pass-through point, or a registered point) is registered in the schedule list, the address book, the telephone directory, the registered point list, or the memo, a destination is selected by means of the destination-setting unit. The estimated arrival time calculating unit calculates the estimated arrival time at which the vehicle reaches the destination. This calculation is based on the information about the route searched by the route search unit **24**. For example, the estimated arrival time is calculated based on the sum of the time required for traveling each road segment that leads to the destination. As for the estimated arrival time, it may be recalculated and updated at intervals of a specified time. In some cases, this recalculation and update may take into consideration the latest traffic congestion information as well as the latest traffic regulatory information which are both stored in the traffic information database **20**. After the recalculation of the estimated arrival time, the comparing unit starts to compare the recalculated estimated arrival time with operator's desired arrival time.

Hereinafter, the terminal **12a** and the terminal **12b** will be further described. Either the terminal **12a** or **12b** may include a transmit-receive unit and a display control device, whereby the information having inputted in the schedule list, calendar, address book, telephone directory, registered point list, memo, and other information are transmitted/received to/from the server **11**. In either the terminal **12a** or **12b**, both the calendar and the map transmitted from the server **11** are displayed on the display device by means of the display control device. Further, onto that calendar and the map, the display control device displays a present position, a destination, and a facility located around said present position. At the same time, it is desirable that the following information be also displayed on said calendar and said map: the desired arrival time, the estimated arrival time, destination name, destination address, the facility data, the telephone number and address data, the event data, road traffic information, the event schedule information, the statistical congestion information, the meteorological information, and the like.

In the present embodiment, the server **11** having, for one example, the map database **17**, the PIM database **21**, the route search unit **24**, and the PIM processing unit **25** may work as a main part of the information display system. In response to the request from either the terminal **12a** or **12b**, the server **11** carries out the route search, as well as a preparation, update, or edit of the schedule list, calendar, address book, telephone directory, registered point list, memo, and the like. The results of said route search, as well as said preparation, update, or edit may be transmitted back to either the terminal **12a** or **12b**. Since the server **11** works as the main part in the information display system in said example case, a compositional simplification and a downsizing of the terminal **12a** and **12b** may be achieved. This makes manufacturing costs of the information terminals lower.

Likewise, from the same economical reasons, instead of the server **11**, either the terminal **12a** or **12b** may include the map database **17** and the route search unit **24** in order to carry out the route search. In this case, either the terminal **12a** or **12b** may work as the main part of the information display system. This leads to a compositional simplification of the server **11** as well as contributes to the reduction of running costs of the information display system.

Further, in other circumstances, instead of the server **11** either the terminal **12a** or **12b** may include the POI database **18**, the road database **19**, the traffic information database **20**, the PIM database **21**, the POI retrieval unit **23**, the PIM processing unit **25**, the destination-setting unit, the estimated arrival time calculating unit, and the comparing unit.

Next, operations of the information display system in the foregoing composition will be described.

Hereinafter, the description takes a case where the information source server **11** comprises the map database **17**, the POI database **18**, the traffic information database **20**, the PIM database **21**, the route search unit **24**, and the PIM processing unit **25**; whereby the route search as well as the preparation, update, or edit of the schedule list, calendar, address book, telephone directory, registered point list, memo, and the like, are carried out, and then the results thereof are transmitted back to the information terminal **12b** in response to the request from the terminal **12a**.

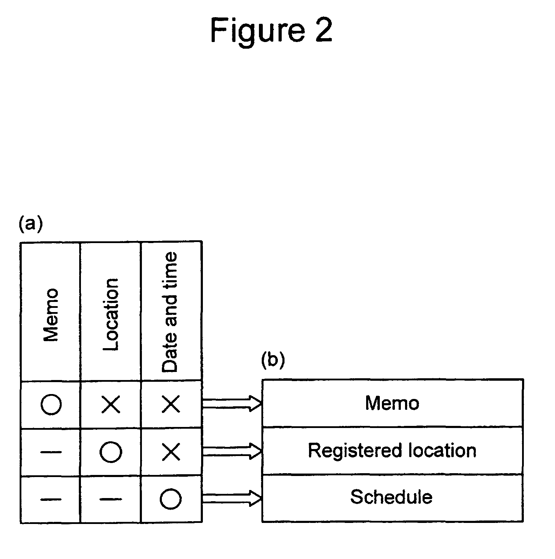

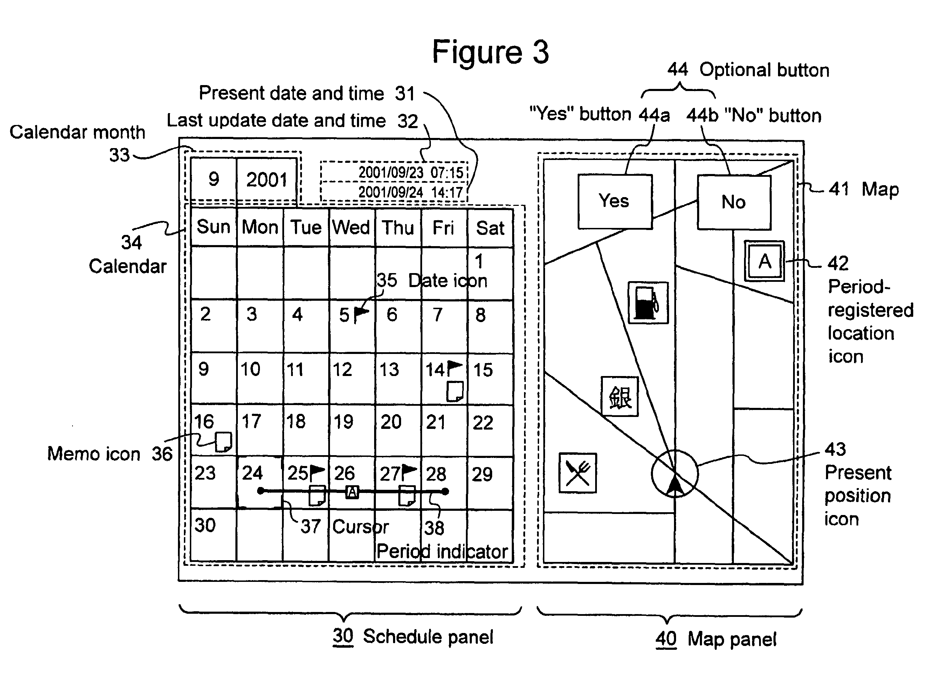

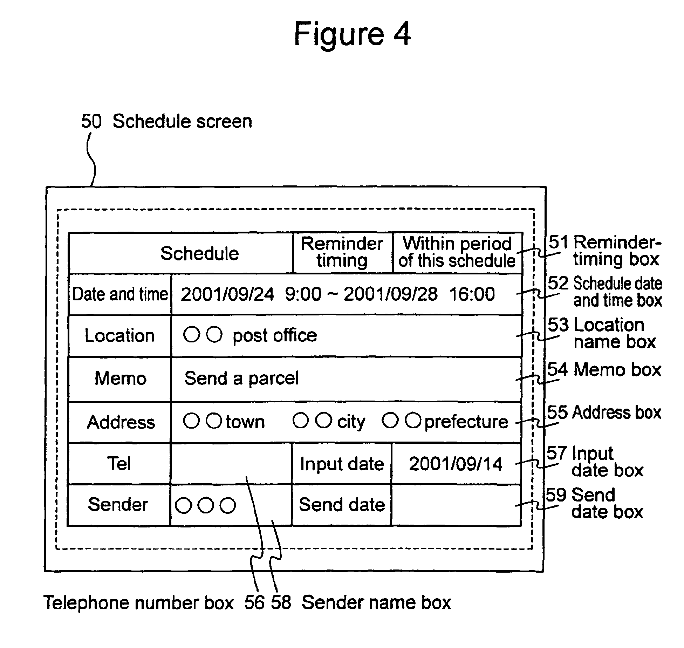

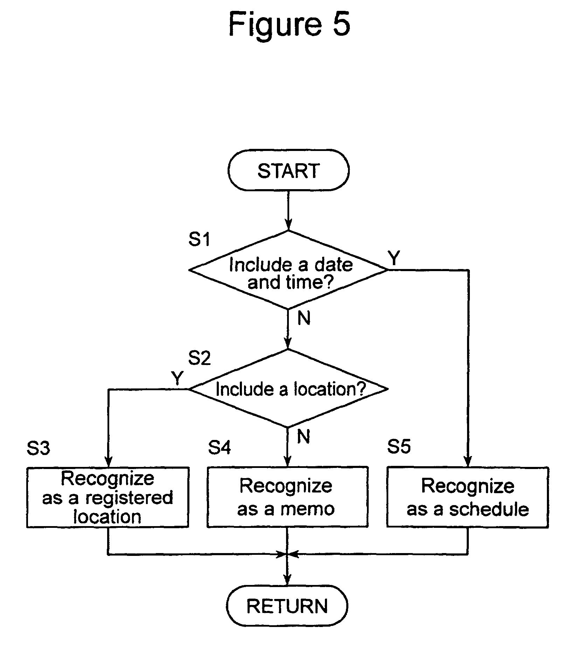

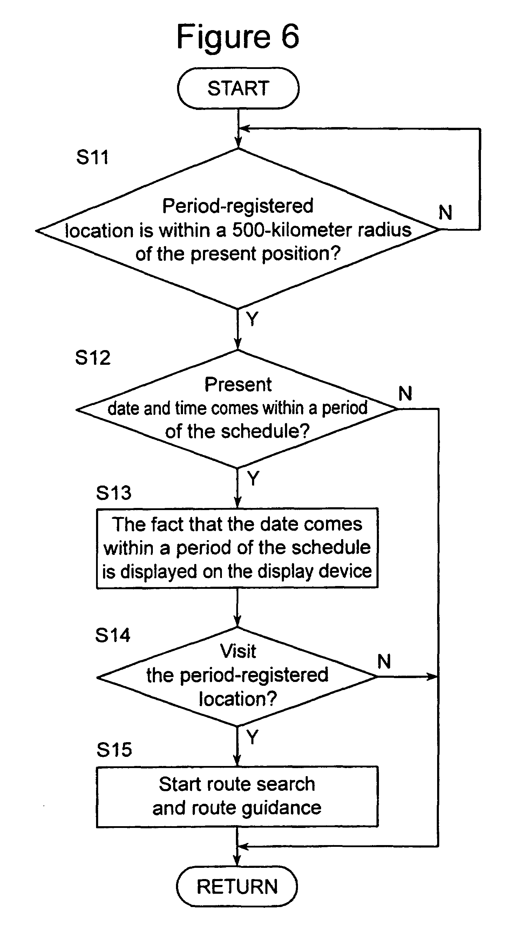

Suppose that the terminal **12a** is a portable telephone or a telephone for PHS (Personal Handy phone System) and the terminal **12b** is a navigation apparatus aboard a vehicle; the terminal **12a** and **12b** are both operated by one operator.
The operations of the information display system will be described with reference to the following figures. **FIG. 2** shows a process of file classification carried out by a PIM processing unit according to the first embodiment of the present invention. **FIG. 3** shows a first exemplary screen view displayed on an information terminal according to a first embodiment of the present invention. **FIG. 4** shows a second exemplary screen view displayed on the information terminal according to the first embodiment of the present invention. **FIG. 5** is a flowchart showing a process of the file classification carried out by the PIM processing unit according to the first embodiment of the present invention. **FIG. 6** is a flowchart showing a process of information display according to the first embodiment of the present invention.

In the operation, firstly, the terminal **12a** is operated to input operator's personal information. Here, the operator's personal information means schedules to be inputted into a schedule list, the calendar, the address book, the telephone directory, the registered point list, the memo, and the like. For example, the operator inputs the schedules for a next month; such as a work, study, hobbies, a drive, a trip, recreations, sports, eat-out, or sightseeing. These schedules are so made that a site, a destination, or a location of a facility is associated with a specified period. For example, the site and the specified period are associated with each other in the schedule as follows: "Build Mr. XX's house by the end of the next month," "Go to the library and borrow some books within a few days," "Visit XX office within this month," "Go to a pharmacy and buy a medicine sometime this week," "Pay a bill from my bank account within the next week," or "Send a parcel from the post office within one week from today."

For inputting schedules, start the PIM program stored in the terminal **12a** is started. With the start of the PIM program, a schedule input view is displayed on the display device in the terminal **12a**.

If the PIM program is not stored in the terminal **12a**, access the server **11** from the terminal **12a** via the network **27**. Upon this access, the PIM program stored in the server **11** is started and the schedule input view is obtained and displayed on the display device in the terminal **12a**.

Then, the schedule is inputted on the schedule input view. The schedule input view has some dialog boxes to input or specify a period of the schedule, a location of the schedule, a description of the schedule, and a memo about the schedule. For the schedule input, it is preferable that a Japanese-syllable input palette be displayed on the schedule input view. In this case, said period, location, description or memo can be inputted on a syllable-by-syllable basis from the Japanese-syllable input palette. Further, it is preferable that an alphanumeric input palette be displayed for the input of telephone numbers or addresses. In this case, the telephone number or the address may be inputted on an alphanumeric basis.

Furthermore, there is the other alternative way of inputting the schedule when the PIM processing unit **25** in the server **11** has a keyword-extracting function. The keyword-extracting function is such that keywords associated with the period of the schedule or the location of the schedule are extracted from sentences written by a natural language. In this case, the schedule input view has a single dialog box to input the sentences such as a memo or a note including said period or said location. When the sentences written by the natural language are inputted into the single dialog box, the PIM processing unit **25** starts to extract the keywords associated with the period of the schedule or the location of the schedule from those sentences. Thereafter, the PIM processing unit **25** automatically allocates the extracted keyword, such as the period of the schedule or the location of the schedule to each corresponding dialog box. When inputting the schedule into the dialogue box, the period of the schedule may not have to be defined by both of a date and a time; rather it may be defined by either a date or a time. Likewise, the location of the schedule may not have to be defined by an accurate address or precise positional coordinates. Furthermore, it is possible to skip the description of the schedule and/or the memo about the schedule.

After the schedule input is finished, the terminal **12a** is operated to transmit the inputted schedule to the server **11** via the network **27**. In the server **11**, the transmit-receive unit **14** receives the schedule from the terminal **12a**. Just at this moment, from that transmitted schedule the terminal specifying unit **16** extracts the ID number to specify the personal file, which corresponding to the terminal **12a**, stored in the PIM database **21**. The personal file is prepared correspondingly to each operator so that the ID number can serve as information to specify the operator.

In addition to the ID number, the period of the schedule, the location of the schedule, the description of the schedule, and/or the memo about the schedule are also extracted from the schedule transmitted from the terminal **12a** by means of the PIM processing unit **25**. Upon this extraction, the PIM processing unit **25** accesses the POI retrieval unit **23** to obtain the positional coordinates of said location of the schedule. After the acquisition of the positional coordinates, the PIM processing unit **25** accesses the personal file, which stored in the PIM database **21**, specified by the terminal specifying unit **16**. Then, the extracted information, such as, period of the schedule, the position of the schedule, the description of the schedule, and/or the memo about the schedule are/is stored into the specified personal file. In that specified personal file, according to the present embodiment, the location of the schedule (including positional coordinates), the description of the schedule, and/or the memo about the schedule are/is registered in association with the period of the schedule. Thus, the schedule inputted by the operator can be registered in the personal file stored in the PIM database **21**.

In this connection, hereinafter the operations of the PIM processing unit **25** will be described in detail.

When the personal information (schedule) is inputted, the PIM processing unit **25** starts to store the inputted personal information into the personal file, which corresponding to the operator, stored in the PIM database **21**. In this process, at first the PIM processing unit **25** judges whether the inputted personal information is defined by a date and time. If the personal information is defined by the date and time, it is recognized that the inputted personal information has an attribute of a schedule. If the personal information is not defined by the date and time, then the PIM processing unit **25** judges whether the inputted personal information is defined by a location. If the personal information is defined by the location, it is recognized that the inputted personal information has an attribute of a registered location. If the personal information is not defined by the location, it is recognized that the inputted personal information has an attribute of a memo.

Said relationship between the inputted personal information and the attributes is illustrated in **FIG. 2**. In **FIG. 2 (a)**, ○ tells "Defined," × tells "Not defined," and ― tells "Not affecting the attribute." For example, take the top row of **FIG. 2 (a)**. This row shows that the inputted personal information is defined by only the memo and not defined by the location as well as the date and time. In such case, it is judged that the inputted personal information has an attribute of a memo as shown in the top row of **FIG. 2 (b)**. Next, take the midst row of **FIG. 2 (a)**. This midst row shows that the inputted personal information is defined by the location and not defined by the date and time. In such case, it is judged that the inputted personal information has an attribute of a registered location as shown in the midst row of **FIG. 2(b)**. Further, take the bottom row of **FIG.2 (a)**. This bottom row shows that the inputted personal information is defined by only the date and time. In such case, it is judged that the inputted personal information has an attribute of a schedule as shown in the bottom row of **FIG.2 (b)**.

After the judgment of the attribute, the PIM processing unit **25** accesses the personal file stored in the PIM database **21** and specified by the terminal-specifying unit **16**. Then, the personal information is stored into that specified personal file. In detail, the personal information having the attribute of a memo is stored into the memo file, the personal information having the attribute of a registered location is stored into the registered location file, and the personal information having the attribute of schedule is stored into the schedule file. When the personal information is defined by the location of the schedule, the PIM processing unit **25** accesses the POI retrieval unit **23** to obtain the positional coordinates of that location. Thus, the personal information inputted by the operator can be classified into three categories: a memo, a registered location, and a schedule. The classified information is registered in its corresponding attribute file contained in the personal file. This personal file stored in the PIM database **21** is prepared for each operator. Once the personal information is inputted, whereby the operator can confirm his/her schedule at any time he/she likes.

The next description centers on operations of confirming the operator's schedule for certain one month by operating the terminal **12b**.

In order to confirm this schedule, firstly the operator transmits a request for the schedule from the terminal **12b** to the server **11** via the network **27**. The transmit-receive unit **14** receives that request from the terminal **12a**. Upon the receipt of the request, the terminal specifying unit **16** extracts the ID number from said transmitted request in order to specify the personal file, which corresponding to the terminal **12b**, stored in the PIM database **21**. As aforesaid, the personal file is prepared correspondingly to each operator so that the ID number may serve as information to specify each operator.

Subsequently, from the schedule file contained in the specified personal file the PIM processing unit **25** extracts the personal information for said one month. The extracted information undergoes data transformation through the send-out information-organizing unit **26** and then transmitted from the transmit-receive unit **14** to the terminal **12b**. In this transmission, the PIM program is sent out together with the data-transformed extracted information to the terminal **12b** if the PIM program is not stored in the terminal **12b**.

Upon the receipt of the data-transformed personal information, the display control device in the terminal **12b** allows the display device to display said data-transformed personal information onto a schedule panel **30** as shown in **FIG. 3.** On the schedule panel **30**, a calendar **34** showing September 2001 is displayed. The panel **30** includes present date and time (year/ month/ day/ hour/ minute) **31**, last update date and time (year/ month/ day/ hour/minute) **32** when the schedule was last updated, and a calendar month (month/year) **33**.

Further, a date icon **35** displayed within each date rectangle in the calendar **34** indicates that the location of the schedule has already been registered in connection with its related date of the schedule. A memo icon **36** displayed within each date rectangle indicates that the memo about the schedule has already been registered in connection with its related date of the schedule. Each date rectangle is surrounded by a cursor **37** so that the date rectangle may be highlighted in a bold line. A period indicator **38** shows a period of the. schedule in connection which a period-registered location icon **42** (described later). The period indicator **38** can take various forms: for example, a frame that surrounds the date rectangles of all dates within a certain period of the schedule, a bar stretched across the date rectangles of all dates within a certain period of the schedule as shown in **FIG. 3**, or color applied to the date rectangles of all dates within a certain period of the schedule.

In addition to the panel **30**, a map panel **40** is displayed on the display device by means of the display control device in the terminal **12b** as shown in **FIG. 3**. Here, the description takes a case where a map **41** depicting an area around the present position of the terminal **12b** is displayed on the panel **40**. On the map panel **40**, a present position icon **43** shows the present position of the terminal **12b**, and the period-registered location icon **42** shows the period-registered location that is registered in connection with the period of the schedule. It is desirable that a destination, a pass-through point, a registered location where the operator frequently visits, a facility such as a post office or a restaurant, or a landmark be displayed on the map **41**.

In the present embodiment, the icon **42** which located within a specified range with reference to the present position of the terminal **12b** is displayed on the map **41**. Such specified range, for example, covers over a N-kilometer radius of the present position of the terminal **12b**. Here, the value of N is changeable; the operator can confirm any period-registered location as far as it exists within the range defined by N.

In confirming the period-registered locations, any registered points inputted from the schedule input view or any arbitrary points on the map may serve as the present position of the terminal **12b** substitutively. Therefore, the operator could confirm the icon **42** located within the area with reference to said inputted registered point or said arbitrary point on the map. That is, in substitution for the present position any points may be optionally selected, and thereby the period-registered locations within the area with reference to such any points may be informed to the operator.

Hereinafter, the description takes a case where the terminal **12b** is the present position and the radius N [kilometer] is 0.5. In this case, the icon **42** located within a 500-meter radius of the present position of the terminal **12b** is displayed on the map **41**.

When the icon **42** is displayed on the map **41**, at the same time the period indicator **38** is displayed on the calendar **34** as shown in **FIG. 3**. **In FIG. 3**, the indicator **38** shows the period of the schedule in connection with the icon **42**; that is, the operator is scheduled to visit the location indicated by the icon **42** somewhere during the period shown by the indicator **38**. However, there is aother case where the icon **42** is not displayed on the map **41** even the period-registered location exists within the 500-meter radius of the present position. Such case occurs when a date indicated by the present date and time **31** has not yet not come within the period indicated by the indicator **38**.

In other words, the icon **42** to remind the operator of the schedule is not displayed on the map **41** unless the date indicated by the present date and time **31** comes within the period indicated by the indicator **38**.

When the icon **42** that reminds the operator of the schedule is displayed on the map **41**, there appears an optional button **44** to determine whether to visit the period-registered location. The optional button **44** comprises "Yes" button **44a** and "No" button **44b**. The operator can determine whether to visit the period-registered location by clicking the cursor **37** on either the "Yes" button **44a** or the "No" button **44b**. Alternatively, the optional button **44** may take the form of a single button. In this case, when the cursor **37** is clicked on the button **44**, it is determined that the operator visits the period-registered location.

When the cursor **37** is placed on the optional button **44** and clicked to determine to visit the period-registered location, the determination result is transmitted from the terminal **12b** to the server **11**. In response to such determination, the route search unit **24** starts to search a route from the present position shown by the icon **43** to the registered location shown by the icon **42**. The searched route is transmitted from the transmit-receive unit **14** in the server **11** to the terminal **12b**, and thereupon route guidance on that searched route is started. This route guidance may be visually given to the operator through the display of the searched route on the map **41**, or alternatively given vocally.

When the cursor **37** is clicked on the "No" button **44b** to determine not to visit the period-registered location, no route search is carried out and therefore no route guidance is given to the operator.

As for the cursor **37**, it is moved around the screen with the operation of the input device provided in the terminal **12b**. The cursor **37** moves upward, downward, rightward, or leftward to the desired date rectangle with the operation of, for example, the joystick or the cross-shaped key. Alternatively, the cursor **37** is moved to the desired date rectangle by inputting numerals that represent the desired date. If the display device takes the form of a touch-sensitive panel, the cursor **37** is moved at the touch of the date rectangle. In **FIG. 3**, the cursor **37** is placed on the date of September **24** as indicated by the present date and time **31**.

If the cursor **37** is moved farther upwardly beyond the top row of the calendar **34**, the calendar **34** goes up to the previous month (August). On the contrary, if the cursor **37** is moved farther downwardly beyond the bottom row of the calendar **34**, the calendar **34** goes down to the next month (October).

The description hereinafter centers on operations of displaying a schedule screen **50** on the schedule panel **30**. When the cursor **37** is clicked on any one of the date rectangles specified by the period indicator **38** (for example, any date from September **24** to September **28** as shown in **FIG. 3**), the display control device in the terminal **12b** allows the schedule screen **50** as shown in **FIG. 4** come up on the schedule panel **30**. The screen **50** details the schedule for one of the dates specified by the indicator **38**.

It is desirable that the schedule panel **30** and the map panel **40** be simultaneously displayed vertically or horizontally side by side on the display device. However, if the size of the display device is small, the panel **30** and the panel **40** may be separately displayed from one after another; in other circumstances, the panel **40** is closed and the panel **30** is displayed alone.

The schedule screen **50** has a reminder-timing box **51** as shown in **FIG. 4**. This box **51** tells the operator whether the time to visually or acoustically remind him/her of the schedule has already come within the period of the schedule. Further, the schedule screen **50** including; a schedule date and time box **52** in which the period of the schedule is shown, a location name box **53** in which a name of the location of the schedule is shown, a memo box **54** in which the description of the schedule is shown, an address box **55** in which an address at the location of the schedule is shown, a telephone number box **56** in which a telephone number to be referred to is shown, an input date box **57** in which the date when the schedule is inputted is shown, a sender name box **58** in which a name of a sender is shown if the schedule is sent by someone from outside to the operator (this will be described hereinafter), and a send date box **59** in which the date when the schedule is sent from outside to the operator is shown.

Thus, from the schedule screen **50**, the operator can make sure of the details of his/her schedule which having already been inputted and registered.

Next, the description centers on operations of editing the registered schedule.

According to the present embodiment, the operator may edit the registered schedules. In editing, firstly the schedule input view is displayed onto the display device in the terminal **12a**. Then, the operator selects the schedule to be edited and thereby the user-selected schedule is displayed on the schedule input view. On the schedule input view, the schedule can be changed or erased, otherwise a new item is added to the schedule. This editing is carried out in the same way as the schedule is newly inputted. For example, the operator may revise the date and time of the schedule, the location of the schedule, or the memo about the schedule in each dialog box. Additionally, if the personal information (schedule) has been inputted in the form of natural language sentences, the operator may revise such sentences so as to change his/her schedule.

After said editing, the edited schedule is transmitted from the terminal **12a** to the server **11** via the network **27**. The transmit-receive unit **14** receives the edited schedule from the terminal **12a**. At the same time, the terminal specifying unit **16** starts the same operation as done in the case where a new schedule is inputted. Thereby, the personal file, which corresponding to the terminal **12a**, stored in the PIM database **21** is specified. Subsequently, from the personal files stored in the PIM database **21** the PIM processing unit **25** selects and accesses said specified personal file. Then, the edited schedule is stored into that selected personal file.

Thus, the schedule having already been registered may be edited just as in the case where the new schedule is inputted. Therefore, the registered schedule edit is easy operation for the operator.

According to the present embodiment, the map **41** may be swiftly drawn and displayed on the display device in the terminal **12b** if the terminal **12b** stores the map information in its storage device as well as includes a map-drawing unit **22**. By contrast, when the terminal **12b** neither stores the map information nor includes the map-drawing unit **22**, a request for drawing the map **41** is transmitted together with data about the location of the schedule from the terminal **12b** to the server **11** via the network **27**. Upon receipt of such request and the data about the location of the schedule, the map-drawing unit **22** in the server **11** accesses the map database **17** so as to draw the map **41** that shows the period-registered location icon **42**, the present position icon **43**, and the optional button **44**. Then, the drawn map **41** is data-transformed through the send-out information-organizing unit **26**. The transformed map is transmitted from the transmit-receive unit **14** to the terminal **12b** and displayed onto the display device in the terminal **12b**.

In another way, the map **41** may be drawn at the moment when the schedule inputted by the operator is registered in the personal file. In this case, the PIM processing unit **25** extracts the location of the schedule from the inputted schedule and transmits the extracted location to the map-drawing unit **22** in order that the map **41** covering the extracted location may be drawn. After being drawn, the map **41** is stored by means of the PIM processing unit **25**, in connection with the location and the date of the schedule, into the operator's personal file in the PIM database **21**. In this case, when the schedule is transmitted from the server **11** to the terminal **12b** in answer to the request from the terminal **12b**, the map **41** may be transmitted together with that schedule to the terminal **12b**. Thereby, the map **41** covering the registered location of the schedule can be swiftly displayed onto the map panel **40** even if the terminal **12b** has neither the map-drawing unit **22** nor the map information.

Additionally, facilities around the location of the schedule may be retrieved and displayed on the map **41**. Usually, when a type of the facility related to the schedule is inputted, such inputted type facilities around the location of the schedule are retrieved. For example, when the terminal **12b** includes the POI retrieval unit **23** and the POI information in its storage means, the facilities around the location of the schedule may be retrieved and displayed onto the display device in the terminal **12b**.

By contrast, when the terminal **12b** neither includes the POI retrieval unit **23** nor the POI information in its storage means, a request for the retrieval of the facility is transmitted together with data about the location of the schedule from the terminal **12b** to the server **11** via the network **27**. Upon receipt of the request and the data about the location of the schedule, the POI retrieval unit **23** in the server **11** accesses the POI database **18** to retrieve the facility around the location of the schedule. Then, the retrieved facility is data-transformed through the send-out information-organizing unit **26**. The facility that experienced the data-transformation is transmitted from the transmit-receive unit **14** to the terminal **12b** and displayed on the display device in the terminal **12b**.

In another way, the facility may be retrieved at the moment when the schedule inputted by the operator is registered in the personal file. In this case, the PIM processing unit **25** extracts the location of the schedule from the inputted schedule and transmits it to the POI retrieval unit **23** in order that the facilities around the location of the schedule may be retrieved. After being retrieved, such retrieved facilities are stored by means of the PIM processing unit **25**, in connection with the location and the date of the schedule, into the operator's personal file in the PIM database **21**.

In this case, when the schedule is transmitted from the server **11** to the terminal **12b** in answer to the request from the terminal **12b**, the retrieved facility may be transmitted together with that schedule to the terminal **12b**. Thereby, the facility around the location of the schedule may be swiftly displayed onto the map panel **40** even if the terminal **12b** has neither the POI retrieval unit **23** nor the POI information.

Further, a route to the location of the schedule may be searched and displayed onto the map **41**. Such route is generally searched based on both a location of the schedule and an operator's house respectively regarded as a destination and a departure point; instead of these points, as needed, any points can be designated as the destination or as the departure point. When the terminal **12b** includes the route search unit **24** and the road information in its storage means, the terminal **12b** may search a route to the location of the schedule and display the searched route onto the display device.

By contrast, when the terminal **12b** includes neither the route search unit **24** nor the road information, a request for the route search is transmitted together with the data about the location of the schedule from the terminal **12b** to the server **11** over the network **27**. Upon receipt of the request and the data about the location of the schedule, the route search unit **24** accesses the road database **19** to search a route to the location of schedule. Then, the searched route is data-transformed through the send-out information-organizing unit **26**. The route that experienced the data-transformation is transmitted from the transmit-receive unit **14** to the terminal **12b** and then displayed on the display device in the terminal **12b**.

In another way, the route may be searched at the moment when the schedule inputted by the operator is registered in the personal file. In this case, the PIM processing unit **25** extracts the location of the schedule from the inputted schedule and transmits it to the route search unit **24** in order that the route to the location of the schedule may be searched. After being searched, the searched route is stored by means of the PIM processing unit **25**, in connection with the location and the date of the schedule, into the operator's personal file in the PIM database **21**. In this case, when the schedule is transmitted from the server **11** to the terminal **12b** in answer to the request from the terminal **12b**, the searched route may be transmitted together with that schedule to the terminal **12b**. Thereby, the route to the location of the schedule may be swiftly displayed onto the map **41** by means of the terminal **12b** even if the terminal **12b** has neither the route search unit **24** nor the road information.

In searching a route, not only the road database **19** but also the traffic information database **20** may be accessed by the route search unit **24** in order to refer to the traffic information such as the congestion information or the traffic regulatory information stored in the database **20**. In this case, the route search unit **24** may search a route allowing for the traffic congestion that is predicted based on the accumulated statistical congestion information or scheduled event information.

For example, suppose a case where the vehicle follows a road around a rail station or a mega commercial facility and it is statistically confirmed that said road is congested everyday except a weekend at a certain time period such as in the evening. In this case, the route search unit **24** so searches a route that said congested road could be excluded from search results. In addition, the route search unit **24** so searches the route that the roads around the scheduled event site of a festival, a parade, or a fireworks display could be excluded from the search results, allowing for the predicted traffic congestion around such event site.

In another way, the route search unit **24** may search a route based on the meteorological information such as a weather forecast that is stored in the traffic information database **20**. For example, when heavy rain is predicted, the route search unit **24** may so perform the route search that a mountain route on which a skid accident frequently occurs could be excluded from the search results.

Further, there is other way of searching a route in a case where the terminal **12** includes the route search unit **24** as well as includes the traffic information such as the traffic regulation or the traffic congestion, the accumulated statistical congestion information, the scheduled event information, or the meteorological information stored in its storage means. In this case, without transmitting a request for a route search to the server **11**, the terminal **12b** alone can search a route by referring to said traffic information, statistical congestion information, scheduled event information, or meteorological information.

In this connection, when the operator designates a date by the cursor **37**, the terminal **12b** displays onto the display device the map **41** which covering the registered location related to the designated date. At the same time, the traffic information, the statistical congestion information, the scheduled event information, or the meteorological information, each of which related to that designated date can be superimposed along the road on the map **41**.

For this superimposition, the following operations are required. First, the terminal 12b transmits a request for the traffic information, the statistical congestion information, the scheduled event information, or the meteorological information, together with the data about the registered location, to the server **11**. Upon the receipt of the request and the data about the registered location, the route search unit **24** in the server **11** accesses the traffic information database **20** and predicts the occurrence of the traffic congestion or the traffic regulation around said registered location. This prediction is based on the accumulated statistical congestion information as to the roads around the registered location and the scheduled event information. In detail, the occurrence of the traffic congestion or the traffic regulation is predicted allowing for the day, season, or time of the schedule. Then, such prediction about traffic congestion or the traffic regulation is data-transformed through the send-out information-organizing unit **26**. The transformed predicted information is transmitted from the transmit-receive unit **14** to the terminal **12b** and then displayed on the display device in the terminal **12b**.

In this regard, it is possible to store the predicted traffic information into the operator's personal file in the PIM database **21** in a manner that the registered location and the designated date are associated with the predicted traffic information.

Further, in aforesaid case where the traffic information such as the traffic congestion information/the traffic regulation information, the accumulated statistical congestion information, or the scheduled event information is stored in the storage device in the terminal **12b**, the terminal **12b** alone may predict the traffic information without transmitting the request for it to the server **11**.

In this connection, when the operator designates a date by the cursor **37**, the terminal **12b** displays onto the display device the map **41** which covering the registered location related to said designated date. At the same time, the meteorological information related to that designated date may be superimposed along the road displayed on the map **41**.

For said superimposition, the following operations are required. First, the terminal **12b** transmits a request for the traffic information together with the data about the registered location to the server **11**. Upon the receipt of the request and the data about the registered location, the route search unit **24** in the server **11** accesses the traffic information database **20** to obtain the meteorological information such as the weather forecast for the area around the registered location. Then, such meteorological information for that area on the designated date is data-transformed through the send-out information-organizing unit **26**. The transformed meteorological information is transmitted from the transmit-receive unit **14** to the terminal **12b** and then displayed onto the display device in the terminal **12b**.

In this regard, it is possible to store the meteorological information into the operator's personal file in the PIM database **21** in a manner that the registered location and the designated date are associated with the meteorological information.

When the terminal **12b** stores the meteorological information such as the weather forecast in its storage device, the terminal **12b** alone may display the meteorological information onto the display device with no transmission of the request for the meteorological information to the server **11**.

Thus, once the date is designated, the traffic information or the meteorological information for the area around the registered location associated with said designated date may be displayed on the display device. By referring to such traffic information or the meteorological information on the display device, the operator may confirm or change his/her schedule.

Not only the designation of the date, but also the designation of the road can trigger a display of the traffic information about the road. When a certain road on the map **41** is designated, the traffic information about such designated road may be displayed on the calendar **34**.

In this case, from the terminal **12b** to the server **11** a request for the traffic information is transmitted together with the road data about the designated road. Upon the receipt of such request and the road data, the route search unit **24** in the server **11** accesses the traffic information database **20** in order to predict the occurrence of the traffic congestion or the traffic regulation on the designated road. This prediction is based on the accumulated statistical congestion information or the scheduled event information as to the designated road. If it is predicted that the designated road will suffer from the traffic congestion or predicted that the designated road will be controlled by the traffic regulation, the date of such congestion or regulation is retrieved from the database **20**. Then, such retrieve date is data-transformed through the send-out information-organizing unit **26**. The data-transformed date is transmitted from the transmit-receive unit **14** to the terminal **12b** and displayed on the display device in the terminal **12b**.

For example, take a case where an autumn festival is scheduled for September 28 in a certain area around the road designated by the operator and it is predicted that said designated road would suffer from the traffic congestion on September 28. In this case, the display of the date rectangle of September 28 in the calendar **34** changes in a certain way. This tells the operator that the designated road would suffer from the congestion on September 28; accordingly, the operator can change his/her schedule if need be.

The present embodiment described hereinbefore takes the case where the schedule is inputted from the terminal **12a** and confirmed on the terminal **12b**, however the present invention is not limited to such case. In opposite manner, the schedule may be inputted from the terminal **12b** and confirmed on the terminal **12a**. Further, both the input of the schedule and the confirmation of the schedule may be carried out in one single information terminal. Furthermore, in other way, the schedules may be inputted and confirmed with no access to the server **11** if said single information terminal comprises the POI database **18**, the road database **19**, the traffic information database **20**, the PIM database **21**, the POI retrieval unit **23**, the PIM processing unit **25**, the destination-setting unit, the estimated arrival time calculating unit, and the comparing unit.

Foregoing descriptions of the present embodiment take the case where the oncoming schedules are confirmed. However, according to the present embodiment, not only such oncoming schedules but also past schedules may be confirmed insofar as the information stored in the PIM database **21** is not erased. That is, the past schedules can be displayed when the specific site point, destination point, or facility point related to the past schedules including a drive, a trip, recreations, sports, eat-out, or sightseeing, is inputted together with its corresponding date of the schedule. According to the present information display system, not only the oncoming schedule but also the past schedule can be displayed onto the display device.

Hereinafter, flowcharts shown in **FIG. 5** and **FIG. 6** will be described.

Firstly, a flowchart showing a process of file classification of the personal information followed by the PIM processing unit **25** is described by referring to **FIG. 5**.

Step S1: Judge whether the personal information (schedule) inputted by the operator includes a date and time. If the date and time are included, go to Step S5. If the date and time are not included, go to Step S2.

Step S2: Judge whether the inputted personal information includes a location. If the location is included, go to Step S3. If the location is not included, go to Step S4.

Step S3: Recognize that the inputted personal information has an attribute of a registered location.

Step S4: Recognize that the inputted personal information has an attribute of a memo.

Step S5: Recognize that the inputted personal information has an attribute of a schedule.

Next, a flowchart showing a process for displaying the information about the period-registered location will be described by referring to **FIG. 6**.

Step S11: Judge whether the period-registered location is within a 500-meter radius of the present position.

Step S12: Judge whether the date indicated by the present date and time **31** comes within a period of the schedule. If said date comes within the period of the schedule, go to Step 13. If said date does not come within the period of the schedule, the process is terminated.

Step S13: When the date indicated by the present date and time **31** comes within the period of the schedule, such fact is displayed on the display device.

Step S14: Judge whether to visit the period-registered location. If the operator determines to visit the period-registered location, go to Step S 15. If the operator determines not to visit the period-registered location, the routine is terminated.

Step S 15: Start route search and provide route guidance.

Thus, according to the present embodiment as aforesaid, the operator inputs his/her schedule such as a work, study, hobbies, sports, eat-out, sightseeing, shopping, and so on in a manner that a specific site point, a destination point, or a facility point is associated with a specific period of time. Thereby, said any point can be displayed as a period-registered location onto the map **41** as far as said point is within the specified range with reference to the present position. On top of that, the period of the schedule which related to said period-registered location may be displayed onto the calendar **34**.

Such calendar **34** tells the operator that he/she is scheduled to visit the period-registered location shown on the map **41** within the period of the schedule displayed on the calendar **34**. Thereby, even if the operator registers rough schedule that has a certain range in date, the operator can be reminded of such rough schedule whenever he/she comes close to the period-registered location during the period of said registered rough schedule. This helps the operator to keep track of his/her oncoming schedules.

Furthermore, according to the present embodiment as aforesaid, the personal information (schedule) having already been inputted or registered may be edited by carrying out the same operations as performed in inputting the personal information newly.

That is, for editing the personal information there is no need to invoke specially a schedule-edit view or a memo-edit view. Further, when the personal information is edited and therewith the attribute of the personal information is changed, the system automatically allocates such edited personal information to the file corresponding thereto. Thus, the operator can easily edit the personal information which having already been registered.

Additionally, according to the present embodiment as aforesaid, when the operator designates a date, a route to the period-registered location may be searched and displayed; and also the predicted traffic information or the predicted meteorological information as to the area around such period-registered location on a date of the registered schedule can be displayed. In such a way, upon the designation of the date, the traffic information or the meteorological information as to the area around the registered location on the date of the schedule may be displayed onto the display device. Thereby, referring to said traffic information and the meteorological information, the operator can confirm or change his/her schedule.

Furthermore, according to the present embodiment as aforesaid, both the calendar **34** and the map **41** displayed in the terminal **12b** may use the schedule i.e., personal information that is inputted from the terminal **12a**. This means that the schedule having already been inputted from the personal computer, the electronic personal organizer, or the portable telephone may be directly used as well as displayed onto both of the calendar **34** and the map **41** in the navigation apparatus. That is, the date or the destination of the schedule can be inputted without using the navigation apparatus.

Hereinafter, a second embodiment according to the present invention will be described referring to the following figures. For convenience of explanation, the same compositions and operations according to the first embodiment are not described hereinafter.

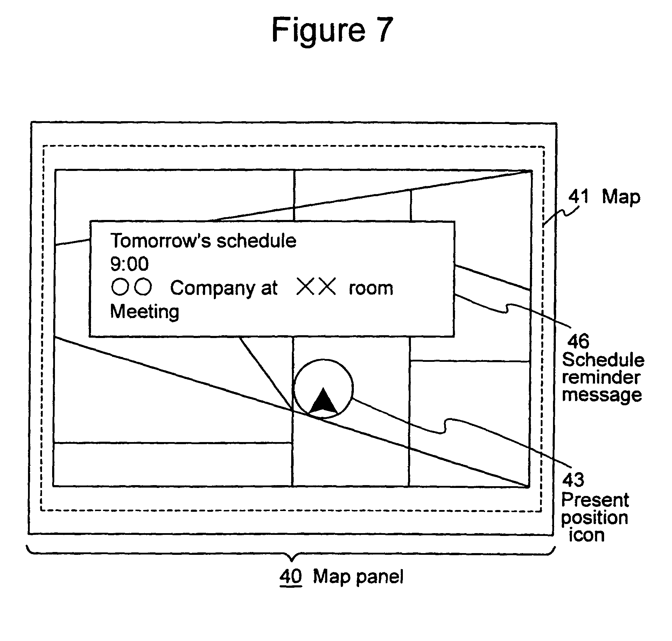

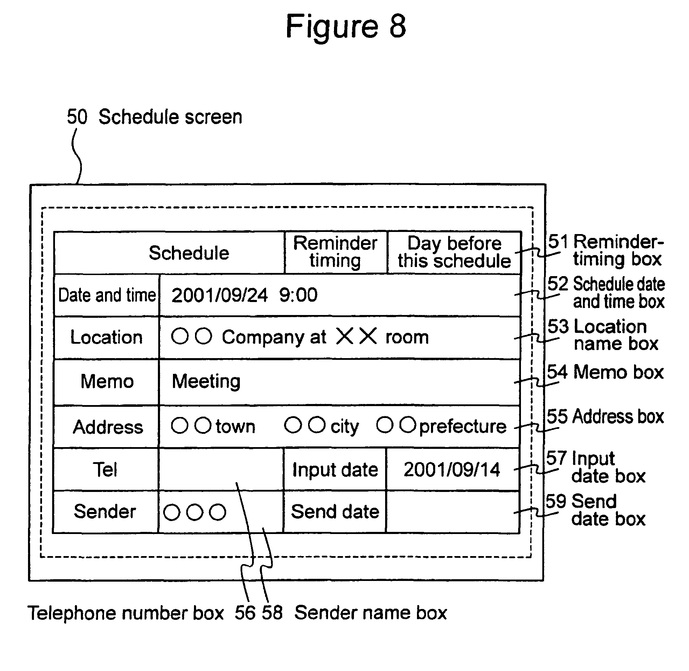

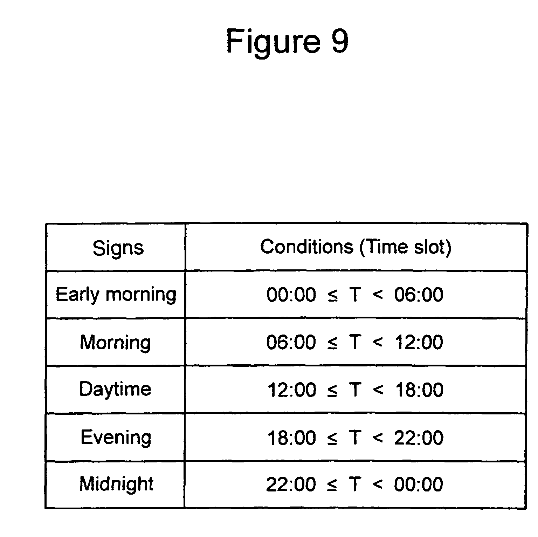

**FIG. 7** shows a first exemplary screen view displayed on the information terminal according to a second embodiment of the present invention. **FIG. 8** shows a second exemplary screen view displayed on the information terminal according to the second embodiment of the present invention. **FIG. 9** shows a third exemplary screen view displayed on the information terminal according to the second embodiment of the present invention.

Here, the description takes a case where the system reminds the operator of the schedule before the date of that schedule comes.

Firstly, the operator operates the terminal **12a** to input his/her personal information, for example, a schedule for a next month. Here, the schedule is such as a work, study, hobbies, a drive, a trip, recreations, sports, eat-out, or sightseeing. Said schedule is so made that a specific site, a destination, a location of a facility, or operator's activity done at the destination is associated with a date of the schedule.

Then, the operator sets the system so as to be reminded of said inputted schedule before the date of the schedule comes. In this regard, the operator can preset the timing of the reminder; generally, such reminder is given to the operator before the date of the schedule comes. In the present second embodiment, the reminder is given to the operator whenever he/she turns on the terminal **12b** before the date of the schedule.

When the operator turns on the terminal **12b**, the map panel **40** is displayed on the display device by means of the display control unit in the terminal **12b** as shown in **FIG. 7**. If the terminal **12b** is an on-board navigation apparatus for a vehicle, the terminal **12b** is automatically turned on when the vehicle engine is started. When the navigation apparatus is turned on, a schedule reminder message **46** appears on the map **41** that depicts the area around the present position. The schedule reminder message **46** tells a summary of the schedule having already been inputted.

When the cursor **37** is clicked on the schedule reminder message **46**, the display control device in the terminal **12b** allows the schedule screen **50** which detailing the schedule reminder message **46** appear onto the display device as shown in **FIG. 8.** The screen **50** has the reminder-timing box **51**. In the present second embodiment, this box **51** tells the timing to remind the operator of his/her schedule. The operator can confirm the details of own schedule on the screen **50**.

It is desirable that the reminder timing be defined by the operator. The reminder timing can be set on a day basis; for example, "Remind me of a schedule one day or two days before the date of that schedule." In another way, the reminder timing may be set on a time slot basis; for example, "Remind me of a schedule on the evening of the day before the date of that schedule," "Remind me of a schedule during 18:00-22:00 of the day before the date of that schedule," or "Reminded me of a schedule on the morning of the date of the schedule." This time slot may be defined as shown in **FIG. 9**, for example.

If the terminal **12b** is a navigation apparatus or a portable telephone that includes a present position detective device, the reminder timing may be set as follows: "Remind me of a schedule when I am on my way home on one day before the date of that schedule" or "Remind me of a schedule when I am on my way to my office on the date of the schedule." Here, for example, take a case where the operator sets the reminder timing as follows: "Remind me of a schedule when I am on my way home on one day before the date of the schedule." In such case, on that one day before the date of the schedule the operator is reminded of the registered schedule on his/her way home when the terminal **12b** enters the specified area at a certain distance from his/her home, for example, the area within a 500-meter radius of his/her home. Further, take a case where the operator sets the reminder timing as follows: "Remind me of a schedule when I am on my way to my office on the date of that schedule." In such case, on the very date of the schedule the operator is reminded of the schedule on his/her way to the office when the terminal **12b** enters the specified area at a certain distance from his/her office, for example, the area within a 500-meter radius of his/her office. In other circumstances, said reminder timing may base exclusively on a location and not base on the date of the schedule nor the time slot. For example, a railway station near the operator's home, an operator's favorite department store, or a park can be a trigger for the reminder. Once a location is specified, the system may remind the operator of today's schedule or next day's schedule whenever the terminal **12b** enters the area at a certain distance from said specified location.

The schedule reminder message may be given to the operator visually on the display device, or may be given acoustically through voices, music, or chimes. For example, take a case where the system is so set that the operator can be reminded of the schedule when he/she is on his/her way home on the evening of one day before the scheduled date. In such case, with a human voice the operator may be reminded of the schedule such as "Meeting from A.M. XX:XX at XX company tomorrow" as if the operator had a secretary. It is preferable that the system be designed to allow the operator to select a male voice or a female voice optionally. Further, it is desirable that the system be designed to allow the operator to set a voice of someone in his/her family, friend, a voice of his/her favorite actor/actress, or a voice of his/her favorite singer.

Advantageously, the schedule reminder message may be automatically switched between the visual reminder and the acoustic reminder according to the time slot. If the time slot is set as shown in **FIG. 9**, the operator is reminded of the today's schedule acoustically early in the morning while reminded of the tomorrow's schedule visually. In the morning and daytime, the operator is reminded of the today's schedule acoustically or visually while reminded of the tomorrow's schedule visually; in the evening and at midnight, the operator is reminded of both the today's schedule and the tomorrow's schedule visually.

Further, the schedule reminder message may be one of being externally transmitted from outside to the terminal **12a**. For example, take a case where the terminal **12a** is such as a portable telephone, a pocket telephone for PHS (Personal Handy Phone system), a mobile information terminal, or a personal digital assistant, each of which is always carried by the operator; otherwise, take a case where the terminal **12a** is a home-use or office-use personal computer in all-day-long service. In such cases, the operator may be reminded of the schedule via the display device or via the speaker, each of which is included in the information terminal **12a**.

The schedule may be one of other's schedule being externally transmitted from other person. The other's schedule transmitted from outside may be registered and notified to the user before the date of the other's schedule comes. In this case, the names of others must have been preliminarily registered in the information display system and accordingly ID numbers must be respectively issued to them. Generally, such others may be friends, acquaintances, or family members of the operator. Usually, it is preferable that said others be registered in the operator's personal file in the PIM database **21**. It is desirable that such others be registered in the name of "Friend" as a sender/recipient on the other end of the communication. However, this "Friend" registration is optional.

Hereinafter, the "Friend" registration will be described in detail. First of all, someone on the other end of the communication sends off his/her own schedule to the operator from his/her information terminal to the server **11** via the network **27**. Here, suppose that the schedule includes a date and time as well as a location for a business meeting, a banquet, a party, a date, or an appointment. If such schedule is transmitted with a name of sender to be shown in the sender name box, the system recognizes the transmitted schedule as "Friend Link" and stores it into a friend link file. Here, "Friend Link" means personal information (schedule) transmitted to the operator from the other person. The friend link file is contained in the PIM database **21** in a manner that each friend link file is associated with each personal file. In this manner, the operator can confirm not only own schedule but also the other's schedule transmitted from other person, i.e., friends, acquaintances, or family members. If the other's schedule includes the business meeting, the banquet, the party, the date, or the appointment with which the operator is involved, such schedule may be copied into the operator's personal file.

That is, the other's schedule can be stored as the operator's schedule into the personal file. Thereby, the operator may be reminded of such other's schedule before the date of that other's schedule comes. For his/her own schedule, the operator may copy and use the other's schedule in its entirety. Thereby, the operator can save himself/herself some work.

As understood from aforesaid embodiment according to the present invention, the preliminarily registration of the schedule makes in-advance acoustic/visual schedule reminder possible, and thereby the operator may be reminded of the registered schedule before the date of the schedule comes.

According to the present embodiment, the schedule reminder timing is in hand of the operator. For the in-advance confirmation of the schedule, the operator may set the reminder timing according to his/her most convenient conditions. Further advantageously, the reminder message style may be selectable from either a visual type or an acoustic type. This allows the operator to be reminded of the schedule in his/her most desirable way.

Thus, according to the present embodiment, the operator can always keep track of the upcoming schedules having already been registered.

As many different embodiments of the present invention may be made without departing from the spirit and scope thereof, it is to be understood that the present invention is not limited to the aforesaid embodiments.

### [Industrial applicability]

The present invention is applicable to any information display systems.

## Claims

1. An information display system, comprising:
(a) a map information storage in which map information is stored;
(b) an input device from which a schedule is inputted;
(c) a schedule storage in which the schedule is stored;
(d) a display device on which a map is displayed; and
(e) a display control device by which a schedule reminder message is displayed on the map at a specified time.

2. The information display system according to claim **1**, comprising:
(a) a server in which the map information storage, the schedule storage, and a transmit-receive unit are included;
(b) a first information terminal in which the input device and a transmit-receive unit are included; and
(c) a second information terminal in which the display device, the display control device, and a transmit-receive unit are included.

3. The information display system according to claim**1**, comprising:
(a) a server in which the map information storage, the schedule storage, and a transmit-receive unit are included; and
(b) an information terminal in which the input device, the display device, the display control device, and a transmit-receive unit are included.

4. The information display system according to any one of claims **1-3**, wherein the specified time at which the schedule reminder message is displayed on the map comes within a period of the schedule.

5. The information display system according to claim **4**, wherein the display device displays a calendar on which the period of the schedule is displayed by means of the display control device.

6. The information display system according to claim **4** or **5**, wherein a location of the schedule is displayed on the map by means of the display control device.

7. The information display system according to claim **6**, wherein a route to the location of the schedule is displayed on the map by means of the display control device.

8. The information display system according to any one of claims **1-3**, wherein the specified time at which the schedule reminder message is displayed on the map comes before a date and time of the schedule.

9. The information display system according to claim **8**, wherein the specified time at which the schedule reminder message is displayed on the map is the moment when a present position of an operator's vehicle arrives at a specified location.

10. The information display system according to claim **8** or **9**, wherein the schedule reminder message may be given acoustically or visually.
